# EUROPÄISCHE PATENTSCHRIFT

(11) **EP 3 164 292 B1**
(45) Veröffentlichungstag und Bekanntmachung des Hinweises auf die Patenterteilung: **11.07.2018**
(21) Anmeldenummer: 15724185.2
(22) Anmeldetag: 06.05.2015
(51) Int. Cl.: B60K 35/00, B60K 37/04, B60R 7/06, B60R 11/00, B60R 11/02, G02B 27/01, B60R 13/02

(54) **ANORDNUNG ZUM FREIGEBEN UND SCHLIESSEN EINER ÖFFNUNG IN EINEM INNENAUSSTATTUNGSTEIL EINES FAHRZEUGS**
ARRANGEMENT FOR OPENING AND CLOSING AN OPENING IN AN INTERIOR TRIM PIECE OF A VEHICLE
DISPOSITIF DE LIBÉRATION ET DE FERMETURE D'UNE OUVERTURE DANS UNE PIÈCE D'AMÉNAGEMENT INTÉRIEUR D'UN VÉHICULE

(30) Priorität: 02.07.2014 DE 102014212793
(43) Veröffentlichungstag der Anmeldung: 10.05.2017
(73) Patentinhaber: Volkswagen Aktiengesellschaft, 38440 Wolfsburg (DE)
(72) Erfinder: GNIELKA, Eckart, 38442 Wolfsburg (DE)
(86) Internationale Anmeldenummer: PCT/EP2015/059993
(87) Internationale Veröffentlichungsnummer: WO 2016/000853

(56) Entgegenhaltungen:
- DE-A1- 10 220 180
- DE-C1- 19 510 749
- JP-A- 2013 203 376
- US-A1- 2006 012 202

## Beschreibung

Die Erfindung betrifft eine Anordnung zum Freigeben und Schließen einer Öffnung in einem Innenausstattungsteil eines Fahrzeugs, insbesondere Kraftfahrzeugs, nach dem Oberbegriff des Patentanspruchs 1 der Erfindung.

Für die Zwecke der vorliegenden Beschreibung soll die übliche Fahrtrichtung eines Fahrzeugs mit "-x" ("minus x"), die Richtung entgegen seiner üblichen Fahrtrichtung mit "+x" ("plus x"), ausgehend von der üblichen Fahrtrichtung (-x) die Richtung in der Horizontalen quer zur x-Richtung nach rechts gesehen mit "+y", ausgehend von der üblichen Fahrtrichtung (-x) die Richtung in der Horizontalen quer zur x-Richtung nach links gesehen mit "-y", die Richtung in der Vertikalen quer zur x-Richtung nach oben gesehen mit "+z", und die Richtung in der Vertikalen quer zur x-Richtung nach unten gesehen mit "-z" bezeichnet werden. Diese Bezeichnungsweise der Raumrichtungen in kartesischen Koordinaten entspricht dem in der Kraftfahrzeugindustrie allgemein verwendeten Koordinatensystem. Überdies werden Begriffe wie "vorne", "hinten", "oben" "unten" sowie Begriffe mit ähnlichem Bedeutungsinhalt einschließlich der Begriffe "rechts" und "links" in der Weise verwendet, wie sie zur Richtungsbezeichnung an einem Kraftfahrzeug üblicherweise gebraucht werden.

Aus der DE 198 04 743 A1 sind Aufstellmechanismen für eine in einer Instrumententafel angeordnete Fahrzeuganzeigevorrichtung, wie ein Navigationssystem, ein Fernsehgerät oder dergleichen bekannt. So ist gemäß einer ersten Ausführungsform die Anzeigevorrichtung mittels einenends angeordneter Stifte in sogenannten Nockenrillen eines Gehäuses verschiebbar geführt. Wenn die Stifte längs der Nockenrillen hin und her bewegt werden, kann die Anzeigevorrichtung zwischen einem liegenden und einem stehenden bzw. aufgestellten Zustand verschoben werden, wobei im aufgestellten Zustand eine Öffnung im Gehäuse durchdrungen wird, die mittels eines schwenkbaren Deckels verschließbar ist. Der Deckel wird während des Öffnungsvorganges mittels der Anzeigevorrichtung geöffnet. Die Stifte sollen mit einem Motor über einen Zahnstangenmechanismus gekoppelt sein. Eine Drehbewegung des Motors soll durch den Zahnstangenmechanismus in eine geradlinige Hin- und Herbewegung umgesetzt werden, so dass die Stifte gleiten können. Wie der Zahnstangenmechanismus im Detail ausgebildet ist, darüber schweigt sich diese Druckschrift aus. Gemäß einer zweiten Ausführungsform der Anzeigevorrichtung ist vorgesehen, dass die Anzeigevorrichtung ebenfalls mittels einenends angeordneter Stifte in Nockenrillen verschiebbar geführt ist und so hoch- oder heruntergeklappt werden kann. Dabei sind auf der Bodenfläche eines die Anzeigevorrichtung aufnehmenden Gehäuses eine rechte und eine linke Zahnstange vorgesehen, auf denen ein Block mittels eines linken und rechten Zahnrades motorbetrieben längs der Zahnstangen bewegt werden kann. Im Block ist der besagte Motor angeordnet. Die Stifte der Anzeigevorrichtung sind sowohl in Nockenrillen des Blocks als auch in Nockenrillen des Gehäuses derart geführt, dass infolge einer Bewegung des Blocks und unter Zuhilfenahme von Verbindungsgliedern die Anzeigevorrichtung aufgestellt oder abgelegt wird.

Die DE 102 20 180 A1 beschreibt eine eine Öffnung in einem Fahrzeug freigebende und schließende Abdeckeinheit für eine in Kopfhöhe ablesbare Anzeigevorrichtung, wobei die Öffnung die Strahlen eines aus einer Anzeigevorrichtung gesandten Bildes zu einem Bildschirm, beispielsweise zur Windschutzscheibe des Fahrzeugs gelangen lässt. Die Abdeckeinheit umfasst eine Abschirmplatte um den geometrischen Strahlengang von der Anzeigevorrichtung zum Bildschirm bzw. zur Windschutzscheibe zu unterbrechen oder freizugeben. Die Abschirmplatte lässt sich mittels eines motorbetriebenen Schwenk- und/oder Hebelmechanismus zwischen einer stehenden und einer liegenden Stellung bewegen.

In der JP 2013/203376 A ist eine sogenannte Combiner-Gehäusevorrichtung offenbart, die Folgendes umfasst: einen Halter zum Haltern eines Combiners; ein erstes Verbindungsteil, das um eine erste Welle drehbar ist, an deren einem Ende die erste Welle angeordnet ist und an deren anderem Ende der Halter angeschlossen ist; und ein zweites Verbindungsteil, das um eine zweite Welle drehbar ist, an deren einem Ende die zweite Welle angeordnet ist und an deren anderem Ende der Halter angeschlossen ist; wobei ein elastisches Element angeordnet ist, das in der Lage ist, mittels eines 4-Gelenk-Verbindungsmechanismus den Combiner aus einem hervorstehenden Zustand in einen untergebrachten Zustand zu bewegen.

Die DE 102 20 180 A1 zeigt eine Abdeckeinheit für eine in Kopfhöhe ablesbare Anzeigeeinrichtung in einem Fahrzeug, zum Öffnen und Schließen einer Öffnung, die Strahlen eines aus einer Anzeigevorrichtung gesandten Bildes zu einem Bildschirm gelangen lässt, wobei die Anzeigevorrichtung im Armaturenbrett angeordnet ist und das Bild in einen Vordergrund des Fahrzeugs eingeblendet wird, um für das Auge eines Fahrers sichtbar zu sein.

Die US 2006/012202 A1 schlägt eine Aufbewahrungsbox mit einem Öffnungs/Schließmechanismus vor. In einem ersten Schritt öffnet ein Verschieben eines Deckels relativ zu einem Kastenhauptkörper teilweise eine Öffnung. In einem zweiten Schritt öffnet ein Verschwenken des Deckels relativ zum Kastenhauptkörper die Öffnung vollständig. In einem dritten Schritt schließt ein Verschwenken des Deckels relativ zum Kastenhauptkörper die Öffnung teilweise. In einem vierten Schritt schließt ein Verschieben des Deckels relativ zum Kastenhauptkörper die Öffnung vollständig.

Die gattungsbildende DE 195 10 749 C1 beschreibt einen Behälter, wie einen Ascher, ein Ablagefach oder dergleichen, insbesondere für Fahrzeuge, mit einem in eine Einbauöffnung im Innenraum eines Fahrzeugs einsetzbaren kastenförmigen Gehäuse mit einer Gehäuseöffnung, die sich zwischen den Seitenwänden des Gehäuses erstreckt und zudem von der oberen Randkante der gegenüber der Rückwand in der Höhe reduzierten Vorderwand vorderseitig und mit der vorderen Randkante der gegenüber der Bodenwand verkürzten Kopfwand des Gehäuses hinterseitig begrenzt ist, mit einem Deckel, bestehend aus einer Deckelplatte und an deren Stirnenden senkrecht abstehend angeordneten, die Seitenwände des Gehäuses übergreifenden Schenkeln, und mit Führungsmitteln zum Bewegen des Deckels aus einer geöffneten Lage, in der die Deckelplatte sich in einem engen Raum zwischen der Kopfwand des Gehäuses und der dieser benachbarten Wand der Einbauöffnung befindet, in eine Schließlage, in der die Deckelplatte die Gehäuseöffnung abdeckt. Die Deckelplatte folgt bei der Überführung aus der geöffneten Lage in die Schließlage wie auch umgekehrt mit der Vorderkante einer im wesentlichen kreisbogenförmigen und mit der Hinterkante einer im wesentlichen geradlinigen Bewegungsbahn.

Aufgabe der Erfindung ist es, eine im Hinblick auf den Stand der Technik alternative Anordnung zum Freigeben und Schließen einer Öffnung in einem Innenausstattungsteil eines Fahrzeugs zu schaffen, welche einfach und kostengünstig ist.

Ausgehend von einer Anordnung zum Freigeben und Schließen einer in einer Deckfläche eines Innenausstattungsteils eines Fahrzeugs, insbesondere Kraftfahrzeugs, vorgesehenen Öffnung mittels eines verstellbaren Abdeckelements, wobei das Abdeckelement durch ein Flächenelement gebildet und von einer Geschlossenstellung, in welcher das Abdeckelement die besagte Öffnung verdeckt, in eine Offenstellung, in welcher das Abdeckelement durch Verstellung desselben die Öffnung freigibt, und zurück überführbar ist, wird die gestellte Aufgabe dadurch gelöst, dass das Abdeckelement an einem mit dem Innenausstattungsteil verbundenen Rahmenelement verfahrbar gelagert ist derart, dass das Rahmenelement zwei orthogonal zu einer vom Rahmenelement oder von der Öffnung überspannten Fläche angeordnete Lagerwangen mit gegenüberliegenden sowie koaxial zueinander angeordneten Lageraugen aufweist, in denen einenends je ein Schwenkhebel um eine gemeinsame erste Schwenkachse schwenkbar gelagert ist, welche Schwenkhebel untereinander verbunden und anderenends in Lagerstellen des Abdeckelements um eine gemeinsame zweite Schwenkachse schwenkgelagert sind, und dass das Abdeckelement zwei zur ersten Schwenkachse hin gerichtete Lagerböcke aufweist, in denen eine achsparallel zur ersten und zweiten Schwenkachse angeordnete und die Lagerböcke durchsetzende Welle drehgelagert ist, wobei an den freien Enden der Welle jeweils ein erstes Zahnrad drehfest angeordnet ist, und wobei die ersten Zahnräder jeweils mit einer an der Lagerwange angeordneten ersten Zahnstange kämmen.

Vorteilhaft kann allein durch die Schwenkbewegung der Schwenkhebel das Freigeben und Schließen der Öffnung bewirkt werden. Eine Aufstellbewegung des Abdeckelements mittels komplizierter Hebelwirkungen zum Freigeben der Öffnung, wie sie der Stand der Technik favorisiert, ist vorliegend entbehrlich, da das Abdeckelement während des Öffnungsvorganges sozusagen längs des Rahmenelements bzw. der Öffnung des Innenausstattungsteils verfährt.

Die Unteransprüche beschreiben bevorzugte Weiterbildungen oder Ausgestaltungen der Erfindung.

Danach sind die ersten Zahnstangen zueinander kongruent ausgebildet. Hieraus resultiert im Hinblick auf die mit der Welle fest verbundenen ersten Zahnräder, die ihrerseits mit je einer in Fahrrichtung des Abdeckelements weisenden ersten Zahnstange kämmen, ein Gleichlauf beider Seiten des Abdeckelements. Wie die Erfindung weiter vorsieht, sind die Lagerstellen in Fahrrichtung des Abdeckelements gesehen an einem Ende des Abdeckelements vorgesehen, wogegen die Lagerböcke ausgehend von besagten Lagerstellen um einen bestimmten Abstand zum anderen Ende des Abdeckelements hin versetzt angeordnet sind. Vorteilhaft kann durch diese Maßnahme eine Wälzkontur der ersten Zahnstangen bzw. ein Verfahrweg des Abdeckelements, beispielsweise ein kurvenförmiger Verfahrweg vorgegeben werden, der beim Öffnungsvorgang ein Abtauchen des Abdeckelements unter die die Öffnung begrenzende Deckflächenabschnitte des Innenausstattungsteils gewährleistet. Insoweit können die ersten Zahnstangen zumindest abschnittsweise gerade und/oder kurvenförmig ausgebildet sein. Um die bereits durch die ersten Zahnstangen bewirkte Zwangsführung des Abdeckelements noch weiter zu verbessern, schließt sich zur Lagerwange hin an jedes erste Zahnrad ein vorzugsweise rotationssymmetrischer und mit der Welle und den ersten Zahnrädern drehender Kulissenstein an, der seinerseits in einer Führungskulisse der Lagerwange geführt ist, die parallel zur ersten Zahnstange verläuft. Durch die Drehbewegung der rotationssymmetrischen Kulissensteine wird einem etwaigen auftretenden Stick-Slip-Effekt begegnet, zumindest jedoch kann besagter Stick-Slip-Effekt wirkungsvoll gemindert werden.

Wie die Erfindung noch vorsieht, ist zumindest ein Schwenkhebel mit einem Schwenkantrieb wirkverbunden. Mittels besagten Schwenkantriebs wird vorteilhaft eine rotatorische Bewegung respektive Schwenkbewegung der Schwenkhebel in eine überwiegend translatorische Bewegung des mit den Schwenkhebeln wirkverbundenen Abdeckelements umgesetzt. Bevorzugt ist der Schwenkantrieb durch einen am Rahmenelement befestigten Motor, insbesondere Elektromotor, oder einen Motor-Getriebe-Block gebildet, dessen Motor- oder Abtriebswelle ein zweites Zahnrad aufweist, welches mit einer am besagten Schwenkhebel angeordneten zweiten Zahnstange kämmt, wobei die zweite Zahnstange durch einen Sektor eines innenverzahnten Stirnrades gebildet ist, und wobei die zweite Zahnstange in einem Bereich zwischen den beiden Enden des Schwenkhebels angeordnet ist. Um nachteilige Einflüsse eines etwaigen vorhandenen Zahnspiels insbesondere zwischen dem zweiten Zahnrad und der zweiten Zahnstange zu verhindern, zumindest jedoch wirkungsvoll zu mindern, ist zumindest einer der Schwenkhebel in Schwenkrichtung federkraftbelastet ausgebildet.

Besonders vorteilhaft ist die erfindungsgemäße Anordnung zum Einbau in ein Innenausstattungsteil in Form einer Instrumententafel, einer Mittelkonsole oder einer Hutablage eines Fahrzeugs geeignet. Im Hinblick auf besagte Instrumententafel kann das Abdeckelement der erfindungsgemäßen Anordnung beispielsweise ein Head-Up-Display abdecken. Unter einem Head-Up-Display wird ein Informationsanzeigesystem verstanden, bei dem die Informationen aus der Instrumententafel heraus und durch eine Öffnung in derselben hindurch in das Sichtfeld des Fahrzeugführers, beispielsweise an eine Windschutzscheibe oder an eine separate sogenannte Combinerscheibe des Fahrzeugs projiziert werden. Mittels des Abdeckelements wird der dabei zu verzeichnende geometrische Strahlengang der Lichtstrahlen unterbrochen oder freigegeben.

Nachstehend wird die Erfindung anhand eines in den Zeichnungen schematisch dargestellten Ausführungsbeispiels näher erläutert. Sie ist jedoch nicht auf dieses Ausführungsbeispiel beschränkt, sondern erfasst alle durch die Patentansprüche definierten Ausgestaltungen. Es zeigen:
- Fig. 1: eine perspektivische Aufsicht auf ein Innenausstattungsteil eines Fahrzeugs mit der erfindungsgemäßen Anordnung zum Freigeben und Schließen einer Öffnung im Innenausstattungsteil gemäß einer ersten Ausführungsvariante (freigegebene Öffnung),
- Fig. 2: die besagte Anordnung in einer weiteren perspektivischen, um etwa 180° um eine Hochachse gedrehten Ansicht (freigegebene Öffnung),
- Fig. 3: die Anordnung nach Fig. 1 und 2 in einer perspektivischen Unteransicht bei geschlossener Öffnung gemäß einer zweiten Ausführungsvariante,
- Fig. 4: eine weitere Unteransicht der Anordnung korrespondierend mit der Ansicht nach Fig. 3 (geschlossene Öffnung),
- Fig. 5: die Anordnung nach Fig. 4 in einer perspektivischen Aufsicht, und
- Fig. 6: eine perspektivische Detaildarstellung der die Kinematik des Abdeckelements bestimmenden Elemente der Anordnung gemäß der zweiten Ausführungsvariante.

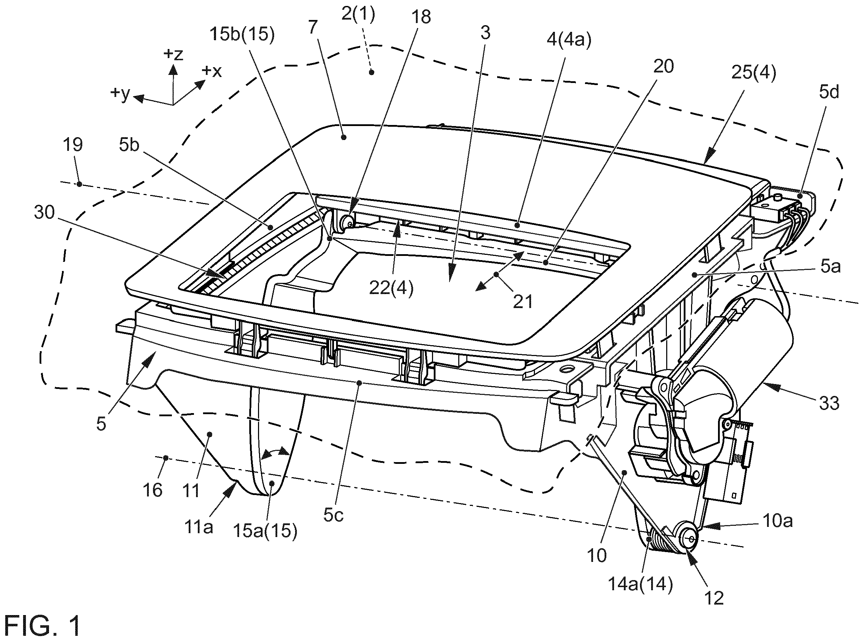

Fig. 1 zeigt zunächst einen relevanten Abschnitt eines Innenausstattungsteils 1, vorliegend beispielhaft einer Instrumententafel eines nicht zeichnerisch dargestellten Fahrzeugs, insbesondere Kraftfahrzeugs. Das Innenausstattungsteil 1 weist in einer horizontalen oder weitestgehend horizontalen oberen Deckfläche 2 eine Öffnung 3 auf. Die Deckfläche 2 muss jedoch nicht horizontal oder weitestgehend horizontal ausgerichtet sein, sondern kann auch von der Horizontalen abweichen und/oder gekrümmt ausgebildet sein.

Gemäß diesem Ausführungsbeispiel gewährleistet besagte Öffnung 3 den Strahlengang der mittels eines nicht zeichnerisch dargestellten Head-Up-Displays erzeugten Lichtstrahlen. Wie bereits oben ausgeführt, wird unter einem Head-Up-Display ein Informationsanzeigesystem verstanden, bei dem die Informationen aus dem Innenausstattungsteil 1 bzw. der Instrumententafel des Fahrzeugs heraus und durch die Öffnung 3 in derselben hindurch in das Sichtfeld des Fahrzeugführers, beispielsweise an eine Windschutzscheibe oder an eine separate sogenannte Combinerscheibe des Fahrzeugs projiziert werden (nicht zeichnerisch dargestellt). Mittels eines verstellbaren Abdeckelements 4 kann dabei der besagte geometrische Strahlengang der Lichtstrahlen unterbrochen oder freigegeben, respektive die Öffnung 3 verschlossen oder freigegeben werden.

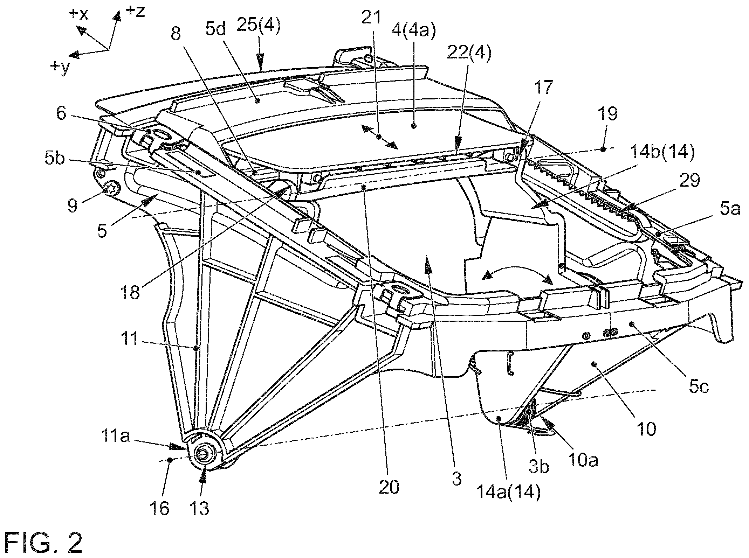

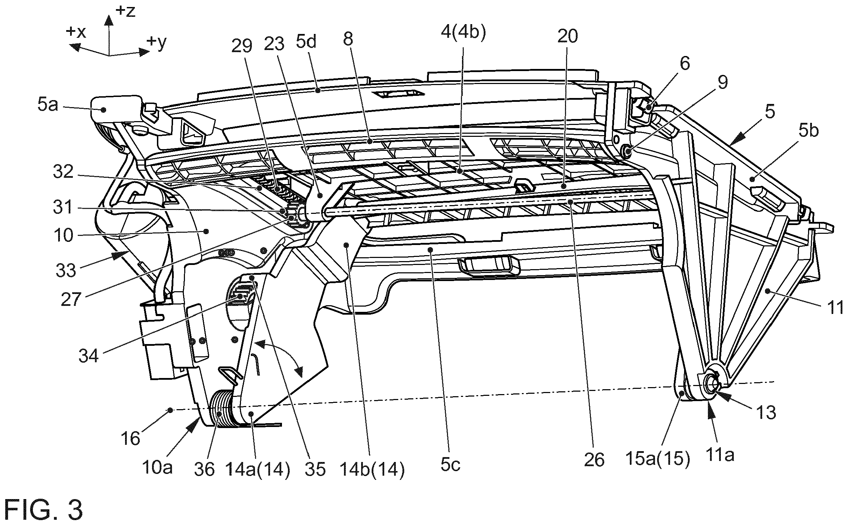

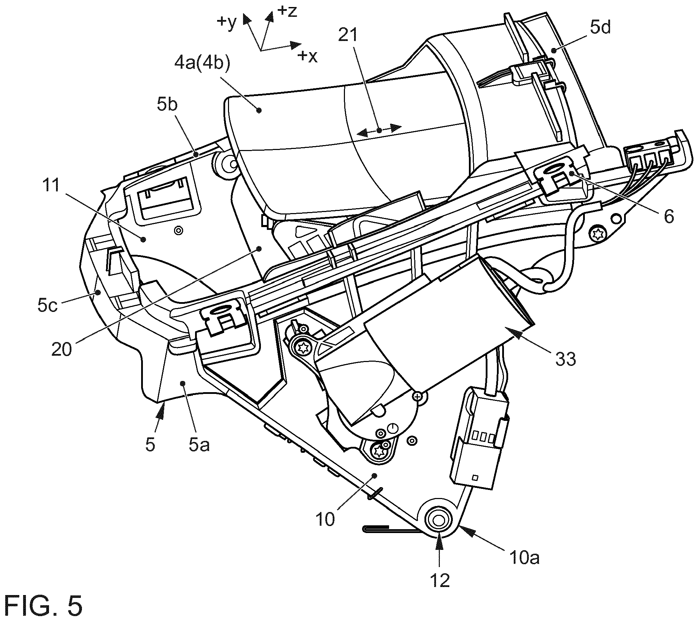

Das besagte Abdeckelement 4 ist durch ein Flächenelement gebildet und von einer Offenstellung 4a, in welcher das Abdeckelement 4 die Öffnung 3 freigibt (vgl. insbes. Fig. 1 und 2), durch Verfahren desselben in eine Geschlossenstellung 4b, in welcher das Abdeckelement 4 die besagte Öffnung 3 einnimmt bzw. verdeckt (vgl. insbes. Fig. 3-5), und zurück überführbar.

Das Abdeckelement 4 ist vorliegend derart verstellbar, dass es während des Öffnungsvorganges sozusagen längs der Öffnung 3 und unterhalb der die Öffnung 3 begrenzenden Deckfläche 2 des Innenausstattungsteils 1 verfährt. Dabei kann beispielsweise das Abdeckelement 4 zumindest abschnittsweise parallel oder weitestgehend parallel zur besagten Deckfläche 2 verfahren werden. Dazu ist das Abdeckelement 4 an einem mit dem Innenausstattungsteil 1, vorliegend dessen Deckfläche 2 fest verbundenen Rahmenelement 5 verfahrbar gelagert.

Das Rahmenelement 5 bildet ein Rechteck aus, welches zwei Längsstreben 5a, 5b aufweist, die untereinander mittels zweier Querstreben 5c, 5d verbunden sind. Die Längsstreben 5a, 5b sind dabei in Fahrzeuglängsrichtung (X-Richtung) ausgerichtet. Das Rahmenelement 5 weist des Weiteren deckflächenseitig sogenannte Schnappmuttern 6 auf, die der Anbindung des Rahmenelements 5 am Innenausstattungsteil 1 bzw. an dessen Deckfläche 2 mittels nicht zeichnerisch dargestellter Befestigungsschrauben oder dgl. dienen. Dabei wird das Rahmenelement 5 von unten gegen die besagte Deckfläche 2 gesetzt und umschließt insoweit die Öffnung 3.

Des Weiteren ist am Rahmenelement 5 von oben eine rahmenförmige Verkleidung 7 durch bevorzugt Verrastung angebracht, um insbesondere mit dem Innenausstattungsteil 1 bzw. der Instrumententafel eine einheitliche Oberfläche zu bilden. Überdies ist dem Rahmenelement 5 noch ein Versteifungselement 8 zugeordnet, welches sich nach Art eines Querträgers heckseitig des Rahmenelements 5 zwischen den Längsstreben 5a, 5b erstreckt und an diesen als Anbauteil mittels Befestigungsschrauben 9 (Fig. 3) befestigt ist.

Gemäß den Fig. 1-6 weist das Rahmenelement 5 ferner zwei orthogonal zu einer vom Rahmenelement 5 bzw. dessen Längs- und Querstreben 5a-5d überspannten Fläche angeordnete Lagerwangen 10, 11 auf. Die Lagerwangen 10, 11 sind in Fahrzeugquerrichtung (Y-Richtung) gesehen beabstandet zueinander jeweils einenends an eine Längsstrebe 5a, 5b des Rahmenelements 5 angebunden und dabei ausgehend vom Rahmenelement 5 von der Deckfläche 2 des Innenausstattungsteils 1 weg gerichtet. Das Rahmenelement 5 samt der Lagerwangen 10, 11 ist bevorzugt einstückig ausgebildet und weiter bevorzugt aus einem Kunststoff nach einem Kunststoff-Spritzgießverfahren hergestellt. Die freien bzw. unteren Enden 10a, 11a der Lagerwangen 10, 11 weisen jeweils ein Lagerauge 12, 13 auf. Die Lageraugen 12, 13 sind koaxial zueinander angeordnet. In den Lageraugen 12, 13 ist einenends bzw. mit je einem unteren, ersten Ende 14a, 15a je ein Schwenkhebel 14, 15 um eine gemeinsame erste Schwenkachse 16 schwenkbar gelagert.

Anderenends bzw. mit ihren oberen, zweiten Enden 14b, 15b sind die Schwenkhebel 14, 15 in Lagerstellen 17, 18 des Abdeckelements 4 um eine gemeinsame zweite Schwenkachse 19 schwenkgelagert. Überdies sind die Schwenkhebel 14, 15 mittels einer Querstrebe 20 untereinander fest verbunden, wobei vorliegend mittelbar über besagte Querstrebe 20 die Anbindung der Schwenkhebel 14, 15 an die Lagerstellen 17, 18 bewirkt ist. Bevorzugt sind die Schwenkhebel 14, 15 samt Querstrebe 20 einstückig aus einem Kunststoff hergestellt. Weiter bevorzugt sind die besagten Lagerstellen 17, 18 in Fahrrichtung 21 des Abdeckelements 4 bzw. in Fahrzeuglängsrichtung (± X-Richtung) gesehen an einem ersten, vorliegend vorderen Ende 22 (-X) des Abdeckelements 4 vorgesehen (vgl. insbes. Fig. 2).

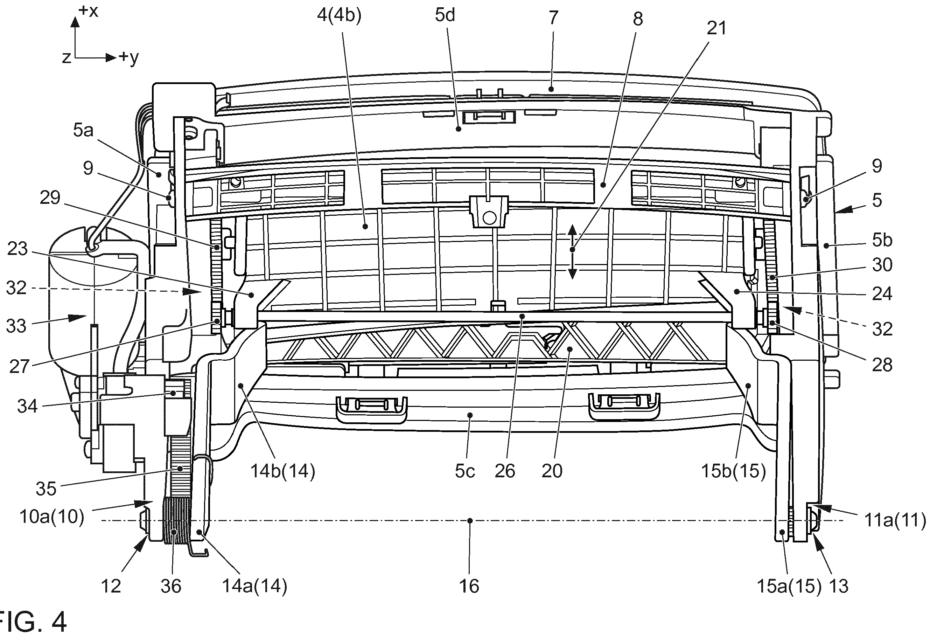

Wie sehr gut aus Fig. 3, 4 und 6 ersichtlich ist, weist das Abdeckelement 4 in Fahrzeugquerrichtung (Y-Richtung) gesehen zwei voneinander beabstandet angeordnete und zur ersten Schwenkachse 16 hin gerichtete Lagerböcke 23, 24 auf. Die Lagerböcke 23, 24 sind in Fahrrichtung 21 des Abdeckelements 4 bzw. in Fahrzeuglängsrichtung (±X-Richtung) gesehen und ausgehend von besagten Lagerstellen 17, 18 um einen bestimmten Abstand zu einem zweiten, vorliegend hinteren Ende 25 (+X) des Abdeckelements 4 hin versetzt angeordnet. Bevorzugt sind die Lagerböcke 23, 24 einstückig mit dem Abdeckelement 4 ausgebildet. In den Lagerböcken 23, 24 ist eine achsparallel zur ersten und zweiten Schwenkachse 16, 19 angeordnete und die Lagerböcke 23, 24 durchsetzende Welle 26 drehgelagert. An den freien Enden der Welle 26 ist jeweils ein erstes Zahnrad 27, 28 drehfest angeordnet (insbes. Fig. 4).

Die ersten Zahnräder 27, 28 kämmen mit einer an der jeweiligen Lagerwange 10, 11 angeordneten ersten Zahnstange 29, 30. Bevorzugt sind die ersten Zahnstangen 29, 30 einstückig mit den Lagerwangen 10, 11 ausgebildet, beispielsweise während des vorerwähnten Kunststoff-Spritzgießverfahrens an die Lagerwangen 10, 11 angespritzt.

Wie insbesondere der Fig. 4 zu entnehmen ist, sind die ersten Zahnstangen 29, 30 zueinander kongruent ausgebildet. Hieraus resultiert im Hinblick auf die mit der Welle 26 fest verbundenen ersten Zahnräder 27, 28 ein Gleichlauf beider Seiten des Abdeckelements 4.

Wie insbesondere den Fig. 2, 3 und 6 zu entnehmen ist, können die ersten Zahnstangen 29, 30 zumindest abschnittsweise gerade und/oder kurvenförmig ausgebildet sein. Vorteilhaft kann durch diese Maßnahme eine Wälzkontur der ersten Zahnstangen 29, 30 bzw. ein Verfahrweg des Abdeckelements 4, beispielsweise ein kurvenförmiger Verfahrweg vorgegeben werden, der beim Öffnungsvorgang ein Abtauchen des Abdeckelements 4 unter die die Öffnung 3 begrenzenden Abschnitte der Deckfläche 2 des Innenausstattungsteils 1 gewährleistet.

Die Fig. 1 und 2 zeigen eine erste Ausführungsvariante der ersten Zahnstangen 29, 30 dahingehend, dass die Verzahnung derselben nach oben zeigt und die ersten Zahnräder 27, 28 sozusagen von oben in besagte Verzahnung eingreifen bzw. eingesetzt sind.

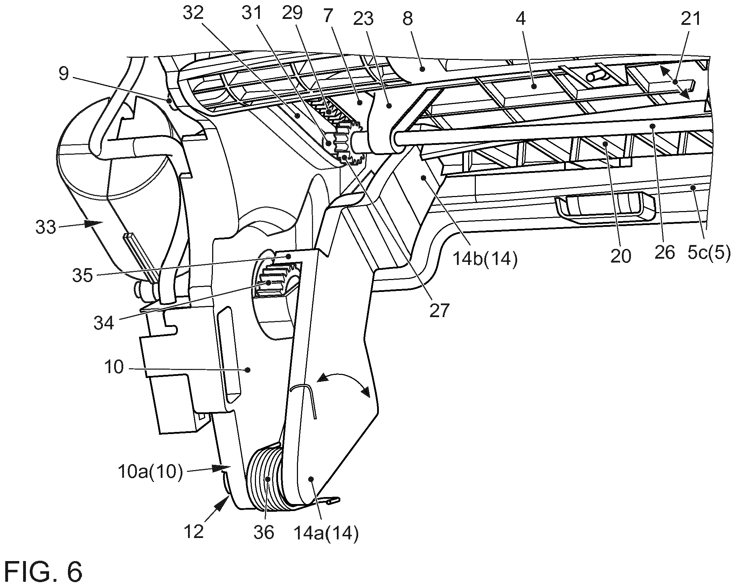

Demgegenüber zeigen die Fig. 3-6 eine zweite Ausführungsvariante der ersten Zahnstangen 29, 30 derart, dass die Verzahnung derselben nach unten zeigt und die ersten Zahnräder 27, 28 sozusagen von unten in besagte Verzahnung eingreifen bzw. eingesetzt sind. Um hier die bereits durch die ersten Zahnstangen 29, 30 bewirkte Zwangsführung des Abdeckelements 4 noch weiter zu verbessern, schließt sich zur Lagerwange 10, 11 hin an jedes erste Zahnrad 27, 28 ein vorzugsweise rotationssymmetrischer und mit der Welle 26 und den ersten Zahnrädern 27, 28 drehender Kulissenstein 31 an, der seinerseits in einer Führungskulisse 32 der jeweiligen Lagerwange 10, 11 geführt ist (Fig. 3 und 6). Die Führungskulissen 32 verlaufen dabei parallel zur ersten Zahnstange 29, 30. Durch die Drehbewegung der rotationssymmetrischen Kulissensteine 31 wird einem etwaige auftreten Stick-Slip-Effekt begegnet, zumindest jedoch kann besagter Stick-Slip-Effekt wirkungsvoll gemindert werden. Die Führungskulissen 32 sind bevorzugt einstückig mit der jeweils zugeordneten Lagerwange 10, 11 ausgebildet.

Um die Verfahrbewegung des Abdeckelements 4 in die eine oder andere Richtung (± X-Richtung) zu bewirken, ist zumindest einer der Schwenkhebel 14, 15, vorliegend der zur Fahrzeugfront (-X-Richtung) gesehen linke Schwenkhebel 14 mit einem Schwenkantrieb 33 wirkverbunden. Mittels besagten Schwenkantriebs 33 wird vorteilhaft eine rotatorische Bewegung respektive Schwenkbewegung der untereinander verbundenen Schwenkhebel 14, 15 in eine überwiegend translatorische Bewegung des mit den Schwenkhebeln 14, 15 wirkverbundenen Abdeckelements 4 umgesetzt.

Bevorzugt ist der Schwenkantrieb 33 durch einen am Rahmenelement 5 befestigten Motor, insbesondere Elektromotor, oder einen Motor-Getriebe-Block gebildet. Vorliegend ist als Schwenkantrieb 33 ein Motor-Getriebe-Block gezeigt. Dessen nicht sichtbare Abtriebswelle durchdringt die dem Schwenkhebel 14 zugeordnete Lagerwange 10 von außen. Am freien Ende der Abtriebswelle ist gemäß den Fig. 3, 4 und 6 ein zweites Zahnrad 34 drehfest angeordnet. Das zweite Zahnrad 34 kämmt mit einer am Schwenkhebel 14 angeordneten zweiten Zahnstange 35. Hierbei ist die zweite Zahnstange 35 durch einen Sektor eines innenverzahnten Stirnrades gebildet und bevorzugt einstückig mit dem Schwenkhebel 14 ausgebildet. Des Weiteren ist vorliegend die zweite Zahnstange 35 in einem etwa mittigen Bereich zwischen den beiden Enden 14a, 14b des Schwenkhebels 14 angeordnet.

Um nachteilige Einflüsse eines etwaige vorhandenen Zahnspiels insbesondere zwischen dem zweiten Zahnrad 34 und der zweiten Zahnstange 35 zu verhindern, zumindest jedoch wirkungsvoll zu mindern, ist zumindest einer der Schwenkhebel 14, 15 in Schwenkrichtung federkraftbelastet ausgebildet. Vorliegend ist am Schwenkhebel 14 eine vorgespannte Schraubenfeder 36 angeordnet, die sich einenends an der Lagerwange 10 und anderenends am Schwenkhebel 14 abstützt.

### Bezugszeichenliste

| | | | |
|---|---|---|---|
| 1 | Innenausstattungsteil | 15 | Schwenkhebel |
| 2 | Deckfläche | 15a | erstes Ende |
| 3 | Öffnung | 15b | zweites Ende |
| 4 | Abdeckelement | 16 | erste Schwenkachse |
| 4a | Offenstellung | 17 | Lagerstelle |
| 4b | Geschlossenstellung | 18 | Lagerstelle |
| 5 | Rahmenelement | 19 | zweite Schwenkachse |
| 5a | Längstrebe | 20 | Querstrebe |
| 5b | Längsstrebe | 21 | Fahrrichtung |
| 5c | Querstrebe | 22 | erstes Ende (Abdeckelement 4) |
| 5d | Querstrebe | 23 | Lagerbock |
| 6 | Schnappmutter | 24 | Lagerbock |
| 7 | Verkleidung | 25 | zweites Ende (Abdeckelement 4) |
| 8 | Versteifungselement | 26 | Welle |
| 9 | Befestigungsschraube | 27 | erstes Zahnrad |
| 10 | Lagerwange | 28 | erstes Zahnrad |
| 10a | unteres Ende (Lagerwange 10) | 29 | erste Zahnstange |
| 11 | Lagerwange | 30 | erste Zahnstange |
| 11a | unteres Ende (Lagerwange 11) | 31 | Kulissenstein |
| 12 | Lagerauge | 32 | Führungskulisse |
| 13 | Lagerauge | 33 | Schwenkantrieb |
| 14 | Schwenkhebel | 34 | zweites Zahnrad |
| 14a | erstes Ende | 35 | zweite Zahnstange |
| 14b | zweites Ende | 36 | Schraubenfeder |

## Patentansprüche

1. Anordnung zum Freigeben und Schließen einer in einer Deckfläche (2) eines Innenausstattungsteils (1) eines Fahrzeugs, insbesondere Kraftfahrzeugs, vorgesehenen Öffnung (3) mittels eines verstellbaren Abdeckelements (4), wobei das Abdeckelement (4) durch ein Flächenelement gebildet und von einer Geschlossenstellung (4b), in welcher das Abdeckelement (4) die besagte Öffnung (3) verdeckt, in eine Offenstellung (4a), in welcher das Abdeckelement (4) durch Verstellung desselben die Öffnung (3) freigibt, und zurück überführbar ist, und wobei das Abdeckelement (4) an einem mit dem Innenausstattungsteil (1) verbundenen Rahmenelement (5) verfahrbar gelagert ist derart, dass das Rahmenelement (5) zwei orthogonal zu einer vom Rahmenelement (5) oder von der Öffnung (3) überspannten Fläche angeordnete Lagerwangen (10, 11) mit gegenüberliegenden sowie koaxial zueinander angeordneten Lageraugen (12, 13) aufweist, in denen einenends je ein Schwenkhebel (14, 15) um eine gemeinsame erste Schwenkachse (16) schwenkbar gelagert ist, welche Schwenkhebel (14, 15) untereinander verbunden und anderenends in Lagerstellen (17, 18) des Abdeckelements (4) um eine gemeinsame zweite Schwenkachse (19) schwenkgelagert sind, **dadurch gekennzeichnet, dass** das Abdeckelement (4) zwei zur ersten Schwenkachse (16) hin gerichtete Lagerböcke (23, 24) aufweist, in denen eine achsparallel zur ersten und zweiten Schwenkachse (16, 19) angeordnete und die Lagerböcke (23, 24) durchsetzende Welle (26) drehgelagert ist, wobei an den freien Enden der Welle (26) jeweils ein erstes Zahnrad (27, 28) drehfest angeordnet ist, und wobei die ersten Zahnräder (27, 28) jeweils mit einer an der Lagerwange (11, 12) angeordneten ersten Zahnstange (29, 30) kämmen.

2. Anordnung nach dem vorhergehenden Anspruch, **dadurch gekennzeichnet, dass** die ersten Zahnstangen (29, 30) zueinander kongruent ausgebildet sind.

3. Anordnung nach einem der vorhergehenden Ansprüche, **dadurch gekennzeichnet, dass** die Lagerstellen (17, 18) in Fahrrichtung (21) des Abdeckelements (4) gesehen an einem Ende (22) des Abdeckelements (4) vorgesehen sind, wogegen die Lagerböcke (23, 24) ausgehend von besagten Lagerstellen (17, 18) um einen bestimmten Abstand zum anderen Ende (25) des Abdeckelements (4) hin versetzt angeordnet sind.

4. Anordnung nach einem der vorhergehenden Ansprüche, **dadurch gekennzeichnet, dass** die ersten Zahnstangen (29, 30) zumindest abschnittsweise gerade und/oder kurvenförmig ausgebildet sind.

5. Anordnung nach einem der vorhergehenden Ansprüche, **dadurch gekennzeichnet, dass** sich zur Lagerwange (12, 13) hin an jedes erste Zahnrad (27, 28) ein Kulissenstein (31) anschließt, der seinerseits in einer Führungskulisse (32) der Lagerwange (12, 13) geführt ist, die parallel zur ersten Zahnstange (29, 30) verläuft.

6. Anordnung nach einem der vorhergehenden Ansprüche, **dadurch gekennzeichnet, dass** zumindest ein Schwenkhebel (14, 15) mit einem Schwenkantrieb (33) wirkverbunden ist.

7. Anordnung nach Anspruch 6, **dadurch gekennzeichnet, dass** der Schwenkantrieb (33) durch einen am Rahmenelement (5) befestigten Motor oder einen Motor-Getriebe-Block gebildet ist, dessen Motor- oder Abtriebswelle ein zweites Zahnrad (34) aufweist, welches mit einer am besagten Schwenkhebel (14, 15) angeordneten zweiten Zahnstange (35) kämmt, wobei die zweite Zahnstange (35) durch einen Sektor eines innenverzahnten Stirnrades gebildet ist, und wobei die zweite Zahnstange (35) in einem Bereich zwischen den beiden Enden (14a, 14b; 15a, 15b) des Schwenkhebels (14, 15) angeordnet ist.

8. Anordnung nach einem der vorhergehenden Ansprüche, **dadurch gekennzeichnet, dass** zumindest einer der Schwenkhebel (14, 15) in Schwenkrichtung federkraftbelastet ausgebildet ist.

9. Anordnung nach einem der vorhergehenden Ansprüche, **dadurch gekennzeichnet, dass** das Innenausstattungsteil (1) eine Instrumententafel, eine Mittelkonsole oder eine Hutablage des Fahrzeugs ist.

10. Anordnung nach einem der vorhergehenden Ansprüche zum Abdecken eines Head-Up-Displays.

## Claims

1. Arrangement for opening and closing an opening (3) provided in a top surface (2) of an interior trim piece (1) of a vehicle, in particular motor vehicle, by means of an adjustable covering element (4), wherein the covering element (4) is formed by a surface element and is transferable from a closed position (4b), in which the covering element (4) covers said opening (3), into an open position (4a), in which the covering element (4), by adjustment thereof, opens up the opening (3), and back, and wherein the covering element (4) is mounted movably on a frame element (5), which is connected to the interior trim piece (1), in such a manner that the frame element (5) has two bearing cheeks (10, 11) which are arranged orthogonally to a surface spanned by the frame element (5) or by the opening (3) and have bearing eyes (12, 13) which lie opposite each other and are arranged coaxially with respect to each other and in which a respective pivot lever (14, 15) is mounted at one end so as to be pivotable about a common first pivot axis (16), which pivot levers (14, 15) are connected to each other and are mounted at the other end in bearing points (17, 18) of the covering element (4) so as to pivot about a common second pivot axis (19), **characterized in that** the cover element (4) has two bearing brackets (23, 24) which are directed towards the first pivot axis (16) and in which a shaft (26) is rotationally mounted, said shaft (26) being arranged axially parallel to the first and second pivot axis (16, 19) and passing through the bearing brackets (23, 24), wherein a first gearwheel (27, 28) is in each case arranged at the free ends of the shaft (26) for rotation therewith, and wherein the first gearwheels (27, 28) each mesh with a first rack (29, 30) arranged on the bearing cheek (11, 12).

2. Arrangement according to the preceding claim, **characterized in that** the first racks (29, 30) are formed congruently to each other.

3. Arrangement according to either of the preceding claims, **characterized in that** the bearing points (17, 18) are provided at one end (22) of the covering element (4), as seen in the moving direction (21) of the covering element (4), whereas the bearing brackets (23, 24) starting from said bearing points (17, 18) are arranged offset by a certain distance towards the other end (25) of the covering element (4).

4. Arrangement according to one of the preceding claims, **characterized in that** the first racks (29, 30) are of rectilinear and/or curved configuration at least in sections.

5. Arrangement according to one of the preceding claims, **characterized in that** a sliding block (31) adjoins each first gearwheel (27, 28) towards the bearing cheek (12, 13), said sliding block, for its part, being guided in a guide slot (32) of the bearing cheek (12, 13) that runs parallel to the first rack (29, 30).

6. Arrangement according to one of the preceding claims, **characterized in that** at least one pivot lever (14, 15) is operatively connected to a pivoting drive (33).

7. Arrangement according to Claim 6, **characterized in that** the pivoting drive (33) is formed by a motor fastened to the frame element (5) or by a motor-gearbox block, the motor shaft or output shaft of which has a second gearwheel (34) which meshes with a second rack (35) arranged on said pivot lever (14, 15), wherein the second rack (35) is formed by a sector of an internally toothed spur gear, and wherein the second rack (35) is arranged in a region between the two ends (14a, 14b; 15a, 15b) of the pivot lever (14, 15).

8. Arrangement according to one of the preceding claims, **characterized in that** at least one of the pivot levers (14, 15) is configured so as to be loaded by spring force in the pivoting direction.

9. Arrangement according to one of the preceding claims, **characterized in that** the interior trim piece (1) is an instrument panel, a central console or a rear parcel shelf of the vehicle.

10. Arrangement according to one of the preceding claims for covering a head-up display.

## Revendications

1. Ensemble pour libérer et fermer une ouverture (3) prévue dans une surface de plafond (2) d'une pièce d'habillage intérieur (1) d'un véhicule et notamment d'un véhicule automobile, au moyen d'un élément ajustable de recouvrement (4), l'élément de recouvrement (4) étant formé par un élément de surface et pouvant être transféré en va-et-vient entre une position fermée (4b) dans laquelle l'élément de recouvrement (4) couvre ladite ouverture (3) et une position d'ouverture (4a) dans laquelle l'élément de recouvrement (4) libère l'ouverture (3) en étant déplacé,
l'élément de recouvrement (4) étant monté de manière à pouvoir se déplacer sur un élément d'encadrement (5) relié à la pièce d'habillage intérieur (1) de telle sorte que l'élément d'encadrement (5) présente deux joues de montage (10, 11) disposées perpendiculairement à une surface sous-tendue par élément d'encadrement (5) ou l'ouverture (3), avec des oeillets de montage (12, 13) situés face à face et coaxialement l'un par rapport à l'autre et dans lesquels une extrémité d'un levier pivotant (14, 15) est montée de manière à pouvoir pivoter autour d'un premier axe commun de pivotement (16), les leviers pivotants (14, 15) étant reliés l'un à l'autre et montés à leur autre extrémité dans des emplacements de montage (17, 18) de l'élément de recouvrement (4) de manière à pouvoir pivoter autour d'un deuxième axe commun de pivotement (19), **caractérisé en ce que**
l'élément de recouvrement (4) présente deux chevalets de montage (23, 24) orientés vers le premier axe de pivotement (16), dans lesquels un arbre (26) dont l'axe est parallèle au premier et au deuxième axe de pivotement (16, 19) et traversant les chevalets de montage (23, 24) est monté à rotation, une première roue dentée (27, 28) étant disposée à rotation solidaire sur chacune des extrémités libres de l'arbre (26), chacune des premières roues dentées (27, 28) s'engrenant sur une première crémaillère (29, 30) disposée sur la joue de montage (12, 13).

2. Ensemble selon la revendication précédente, **caractérisé en ce que** les premières crémaillères (29, 30) sont configurées de manière à converger l'une vers l'autre.

3. Ensemble selon l'une des revendications précédentes, **caractérisé en ce que** les emplacements de montage (17, 18) sont prévus à une extrémité (22) de l'élément de recouvrement (4) dans la direction de déplacement (21) de l'élément de recouvrement (4), et en revanche les chevalets de montage (23, 24) sont disposés à une distance définie de décalage par rapport à l'autre extrémité (25) de l'élément de recouvrement (4) partant desdits emplacements de montage (17, 18).

4. Ensemble selon l'une des revendications précédentes, **caractérisé en ce que** les premières crémaillères (29, 30) sont au moins en partie rectilignes et/ou incurvées.

5. Ensemble selon l'une des revendications précédentes, **caractérisé en ce qu'**un coulisseau (31) qui est lui-même guidé dans une coulisse de guidage (32) de la joue de montage (12, 13) se raccorde du côté de la joue de montage (12, 13) à chaque première roue dentée (27, 28).

6. Ensemble selon l'une des revendications précédentes, **caractérisé en ce qu'**au moins un levier pivotant (14, 15) coopère avec un entraînement de pivotement (33).

7. Ensemble selon la revendication 6, **caractérisé en ce que** l'entraînement de pivotement (33) est formé par un moteur ou un bloc moteur-transmission fixé sur l'élément d'encadrement (5), dont l'arbre moteur ou de sortie présente une deuxième roue dentée (34) qui s'engrène sur une deuxième crémaillère (35) disposée sur ledit levier pivotant (14, 15), la deuxième crémaillère (35) étant formée par un secteur d'une roue frontale à denture intérieure, la deuxième crémaillère (25) étant disposée entre les deux extrémités (14a, 14b; 15a, 15b) du levier pivotant (14, 15).

8. Ensemble selon l'une des revendications précédentes, **caractérisé en ce qu'**au moins l'un des leviers pivotants (14, 15) est configuré de manière à être sollicité élastiquement dans la direction de pivotement.

9. Ensemble selon l'une des revendications précédentes, **caractérisé en ce que** la pièce d'habillage intérieur (1) est un tableau de bord, une console centrale ou un porte-chapeau du véhicule.

10. Ensemble selon l'une des revendications précédentes, pour recouvrir un affichage tête haute.
